# EUROPEAN PATENT APPLICATION

(11) **EP 4 819 727 A1**
(43) Date of publication of application: **07.10.2026**
(21) Application number: 24896399.3
(22) Date of filing: 21.11.2024
(51) Int. Cl.: H04W 72/0453

(54) **DATA TRANSMISSION METHOD AND APPARATUS, COOPERATIVE-TRANSMISSION-RESOURCE ALLOCATION METHOD AND APPARATUS, AND DEVICE**

(30) Priority: 30.11.2023 CN 202311630497
(71) Applicant: Datang Mobile Communications Equipment Co., Ltd., Beijing 100085 (CN)
(72) Inventor: CHEN, Li, Beijing 100085 (CN); SUN, Shaohui, Beijing 100085 (CN); ZHAO, Jinbo, Beijing 100085 (CN); FANG, Liang, Beijing 100085 (CN); LIU, Haitao, Beijing 100085 (CN)
(74) Representative: Studio Torta S.p.A.
(86) International application number: PCT/CN2024/133490
(87) International publication number: WO 2025/113308

(57) **Abstract**

Provided in the present disclosure are a data transmission method and apparatus, a cooperative-transmission-resource allocation method and apparatus, and a device. The data transmission method comprises: a terminal receiving radio resource control (RRC) signaling sent by a first network node, wherein the RRC signaling is used for pre-configuring cooperative transmission resources; and on the basis of the cooperative transmission resources, receiving or sending data.

## Description

### CROSS-REFERENCES TO RELATED APPLICATIONS

The present application claims priority to Chinese application No. 202311630497.0 filed on November 30, 2023, entitled "Data Transmission Method and Apparatus, Cooperative-transmission-resource Allocation Method and Apparatus, and Device", which is hereby incorporated by reference in its entirety.

### FIELD

The present application relates to the field of radio communication, and in particular, to a method, a device and an apparatus for data transmission and a method, a device and an apparatus for cooperative transmission resource allocation.

### BACKGROUND

In traditional mobile radio communication systems (3G, 4G, and 5G), the scheduling and transmission for a terminal (also referred to as user equipment, UE) are performed in a unit of a cell. That is, the terminal receives downlink transmissions sent from a base station and sends uplink transmissions to the base station within a cell. The uplink and downlink resources, the identity used to identify the transmission during scheduling and transmission, and the identity used to identify the terminal during scheduling and transmission all belong to that cell. The scheduling and transmission mechanisms leads to degraded transmission performance for terminals at the cell edge. To address this, cooperative transmission involving different cells or different transmission/reception points (TRPs) is introduced. In this approach, different cells or different TRPs send the same downlink transmission (for example, different cells send the same data to the terminal), allowing the terminal to obtain combining gain during reception. In the uplink direction, different cells or different TRPs simultaneously receive the transmission sent from the terminal, and transmission combining is performed on the base station side to achieve combining gain.

However, current cooperative transmission technologies only be implemented among multiple cells or TRPs that require no signaling interaction and have no synchronization difference. It is difficult to realize cooperative transmission for the same terminal by different cells or TRPs in actual deployments.

### BRIEF SUMMARY

Embodiments of the present application provide a method, a device and an apparatus for data transmission and a method, a device and an apparatus for cooperative transmission resource allocation to realize cooperative transmission for the same terminal by different cells or TRPs and to improve transmission performance.

An embodiment of the present application provides a method for data transmission, performed by a terminal, including:
receiving a radio resource control (RRC) signaling sent from a first network node, where the RRC signaling is used to pre-configure a cooperative transmission resource; and
performing data reception or sending based on the cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

In some embodiments, the method further includes:
receiving a physical downlink control channel (PDCCH) order sent from a second network node, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the second network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

In some embodiments, the method further includes:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the method further includes:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

An embodiment of the present application provides a method for cooperative transmission resource allocation, performed by a first network node, including:
sending a radio resource control (RRC) signaling to a terminal, where the RRC signaling is used to pre-configure a cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the method further includes:
sending a physical downlink control channel (PDCCH) order to the terminal, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the method further includes:
interacting pre-configuration information and/or activation information of the cooperative transmission resource with other network nodes participating in cooperative transmission through an interface between distributed data units, an interface between a central control-plane node and a distributed data unit, or an interface between base stations.

In some embodiments, the method further includes:
determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the method further includes:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is periodically validated resource, one-time validated resource, or resource validated for a specified number of times.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

An embodiment of the present application provides a terminal, including a memory, a transceiver and a processor,
where the memory is used for storing a computer program, the transceiver is used for receiving and transmitting data under control of the processor and the processor is used for reading the computer program in the memory and performing operations of:
receiving a radio resource control (RRC) signaling sent from a first network node, where the RRC signaling is used to pre-configure a cooperative transmission resource; and
performing data reception or sending based on the cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

In some embodiments, the operations further include:
receiving a physical downlink control channel (PDCCH) order sent from a second network node, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the second network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

In some embodiments, the operations further include:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

In some embodiments, the operations further include:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the operations further include:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

An embodiment of the present application provides a first network node, including a memory, a transceiver and a processor,
where the memory is used for storing a computer program; the transceiver is used for receiving and transmitting data under control of the processor; the processor is used for reading the computer program in the memory and performing operations of:
sending a radio resource control (RRC) signaling to a terminal, where the RRC signaling is used to pre-configure a cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the operations further include:
sending a physical downlink control channel (PDCCH) order to the terminal, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the operations further include:
interacting pre-configuration information and/or activation information of the cooperative transmission resource with other network nodes participating in cooperative transmission through an interface between distributed data units, an interface between a central control-plane node and a distributed data unit, or an interface between base stations.

In some embodiments, the operations further include:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

In some embodiments, the operations further include:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the operations further include:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

An embodiment of the present application further provides an apparatus for data transmission, including:
receiving unit, used for receiving a radio resource control (RRC) signaling sent from a first network node, where the RRC signaling is used to pre-configure a cooperative transmission resource; and
transmitting unit, used for performing data reception or transmission based on the cooperative transmission resource.

An embodiment of the present application further provides an apparatus for cooperative transmission resource allocation, including:
sending unit, used for sending a radio resource control (RRC) signaling to a terminal, where the RRC signaling is used to pre-configure a cooperative transmission resource.

An embodiment of the present application further provides a non-transitory readable storage medium storing a computer program, where the computer program is used to cause a computer to perform the method for data transmission or the method for cooperative transmission resource allocation described above.

An embodiment of the present application further provides a communication device storing a computer program, where the computer program is used to cause a communication device to perform the method for data transmission or the method for cooperative transmission resource allocation described above.

An embodiment of the present application further provides a processor-readable storage medium storing a computer program, where the computer program is used to cause a processor to perform the method for data transmission or the method for cooperative transmission resource allocation described above.

An embodiment of the present application further provides a chip product storing a computer program, where the computer program is used to cause a chip product to perform the method for data transmission or the method for cooperative transmission resource allocation described above.

According to the method, the device and the apparatus for data transmission and the method, the device and the apparatus for cooperative transmission resource allocation provided by the present application, resources used for cooperative transmission are pre-configured for a terminal by a network side and downlink data reception or uplink data sending is performed by the terminal based on the pre-configured a cooperative transmission resource. Even if there is a transmission delay in signaling interaction between different cells or TRPs, or there is a timing synchronization difference between different cells or TRPs, cooperative transmission for the same terminal by different cells or TRPs is achieved, and transmission performance is improved.

### BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.
FIG. 1 is a schematic diagram of cooperative transmission between different cells in two deployment modes in prior art;
FIG. 2 is a schematic flowchart of a method for data transmission according to an embodiment of the present application;
FIG. 3 is a schematic flowchart of a method for cooperative transmission resource allocation according to an embodiment of the present application;
FIG. 4 is a schematic structural diagram of a terminal according to an embodiment of the present application;
FIG. 5 is a schematic structural diagram of a first network node according to an embodiment of the present application;
FIG. 6 is a schematic structural diagram of an apparatus for data transmission according to an embodiment of the present application; and
FIG. 7 is a schematic structural diagram of an apparatus for cooperative transmission resource allocation according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

In the embodiments of the present application, terms "first," "second," etc. are used to distinguish similar objects and are not used to describe a particular order or sequence. It is to be understood that the terms so used are interchangeable in appropriate circumstances embodiments of the present application can be practiced in sequences other than those illustrated or described herein, and that objects distinguished by "first" and "second" are usually belong to one type, and the number of objects is not limited. For example, the first object can be one or multiple.

The solutions in the embodiments of the present application are clearly and completely described below in conjunction with the accompanying drawings in the embodiments of the present application. These described embodiments are a part of the embodiments of the present application, and not all of the embodiments. All other embodiments obtained by those skilled in the art based on the embodiments of the present application without creative work are within the scope of the present application.

In order to illustrate the solutions in the embodiments of the present application more clearly, some contents related to the embodiments of the present application are introduced first.

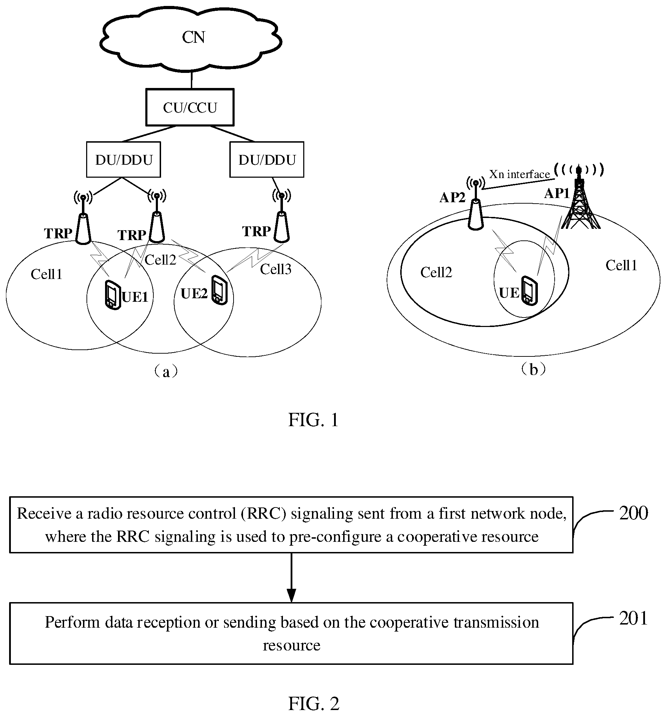

FIG. 1 is a schematic diagram of cooperative transmission between different cells in two deployment modes in prior art. In part (a) of FIG. 1, a base station is deployed in a mode of central unit (CU)- distributed unit (DU)- transmission/reception points (TRP) or cloud-based control unit (CCU)- distributed data unit (DDU)-TRP, where a CU or CCU is a central control-plane node, and a DU or DDU is a distributed data unit connected to one or more TRPs (). One or more TRPs in a DDU constitute a base-station-side cell used for scheduling and transmission for a UE. In FIG. 1, one TRP corresponds to one base-station-side cell is used as an example, UE1 is subject to cooperative transmission by Cell 1 and Cell 2, and UE2 is subject to cooperative transmission by Cell 2 and Cell 3. If inter-cell cooperative transmission is to be achieved, transmission resources (time, frequency, and space resources) and transmission formats (modulation and coding scheme (MCS), redundancy version (RV), etc.) need to be unified among the cells participating in the cooperation and signaling interaction between cells is required. For UE1, different cells are managed by one DU/DDU, making it relatively easy to interact air-interface cooperative transmission information between cells. For UE2, different cells belong to different DUs/DDUs, and the interaction of air-interface cooperative transmission information between cells causes transmission delay issues, preventing timely scheduling. Different DUs/DDUs usually have synchronization time differences, and cooperative transmission in different cells also faces timing synchronization problems.

In part (b) of FIG. 1, an access point (AP) is an independent base station node, typically a macro base station or a home base station. Different base stations are respectively responsible for scheduling and transmission, and their signaling interaction is conducted through an Xn interface. The delay range of the Xn interface is very large, which prevents timely interaction of air-interface cooperative transmission information. Meanwhile, there is also the timing synchronization problem for cooperative transmission in different cells.

Although transmission performance can be improved by using multiple TRPs to perform air-interface transmission with a terminal (i.e., multiple TRP (m-TRP) technology), cooperative transmission between different cells is difficult to implement in actual deployment due to the information interaction delay and different timing synchronization characteristics between different cells.

To address the above problems, a solution is provided by embodiments of the present application. According to the solution, resources used for cooperative transmission are pre-configured for a terminal by a network side. Even if there is a transmission delay in signaling interaction between different cells or TRPs, or there is a timing synchronization difference between different cells or TRPs, cooperative transmission for one terminal by different cells or TRPs is achieved.

FIG. 2 is a schematic flowchart of a method for data transmission according to an embodiment of the present application. The method is performed by a terminal. As shown in FIG. 2, the method includes the following steps:
step 200: receiving a radio resource control (RRC) signaling sent from a first network node, where the RRC signaling is used to pre-configure a cooperative transmission resource; and
step 201: performing data reception or sending based on the cooperative transmission resource.

In an embodiment, the cooperative transmission resource is resource used for cooperative transmission, refer to: a downlink resource used for sending or participating in sending downlink data by other cells or other TRPs (i.e., not the current cells or not the current TRPs), and an uplink resource used for receiving uplink data by other cells or other TRPs.

In some embodiments, the cooperative transmission resource is a periodically validated resource, a one-time validated resource, or a resource validated for a specified number of times.

In the embodiments of the present application, the cooperative transmission resource is pre-configured for the terminal through a RRC signaling by the network side. After the pre-configured cooperative transmission resource is configured by the network side, at a time at which the pre-configured cooperative transmission resource is validated, the terminal receives downlink data or sends uplink data based on a physical-layer resource and a transmission format allocated for the pre-configured cooperative transmission resource. Correspondingly, at the time at which the pre-configured cooperative transmission resource is validated, each cell or TRP participating in the cooperative transmission of the network side sends the downlink data or receives the uplink data, based on the physical-layer resource and the transmission format allocated for the pre-configured cooperative transmission resource. In this way, even if there is a transmission delay in signaling interaction between different cells or TRPs, or there is a timing synchronization difference between different cells or TRPs, cooperative transmission for one terminal by different cells or TRPs is achieved.

In some embodiments, the RRC signaling includes one or more pieces of following information.
(1) Information on valid time of the cooperative transmission resource. The information on valid time is used to determine an actual time at which the cooperative transmission resource is validated.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

For example, an absolute valid time of the cooperative transmission resource is pre-configured by the RRC signaling, and the actual valid time of the cooperative transmission resource is determined by the terminal based on the absolute valid time. The absolute valid time may be a value represented in units of year, month, day, hour, minute, second, or millisecond, etc. or may be a value represented by a system frame number, subframe number, or slot number.

For another example, a time offset deltaT of an absolute valid time of the cooperative transmission resource relative to a sending time of the RRC signaling is pre-configured by the RRC signaling. When the RRC signaling is received by the terminal, the sending time of the RRC signaling is determined, and the actual valid time of the cooperative transmission resource is determined by adding the pre-configured time offset value in the RRC signaling to the sending time of the RRC signaling.

(2) Periodicity of the cooperative transmission resource.

For example, the cooperative transmission resource pre-configured by the RRC signaling is a periodically validated resource, and a start time of each cooperative transmission resource is periodically determined by the terminal based on the valid time of the cooperative transmission resource and the periodicity of the cooperative transmission resource.

(3) A number of the cooperative transmission resources within each periodicity of the cooperative transmission resource. The periodicity of the cooperative transmission resource is periodicity of the pre-configured cooperative transmission resource.

For example, assuming that the number of the cooperative transmission resources pre-configured by the RRC signaling within each periodicity of the cooperative transmission resource is N, the terminal determines that there are N consecutive pre-configured resources within each periodicity of the cooperative transmission resource starting from the start time of each cooperative transmission resource. If the pre-configured cooperative transmission resource is validated for one time, the number of the pre-configured cooperative transmission resource is determined as N.

(4) A valid number of times of the cooperative transmission resource.

For example, assuming that the valid number of times of the cooperative transmission resource is pre-configured as K by the RRC signaling, the terminal determines that the cooperative transmission resource is validated for a specified number of times (i.e., K times), or determines that the cooperative transmission resource is validated within K periodicities (i.e., the valid number of times can also be understood as the number of valid periodicities).

(5) Configuration information of a physical-layer resource for the cooperative transmission resource.

The configuration information of the physical-layer resource includes information such as time-frequency resource configuration and a transmission mode. The transmission mode (also referred to as a transmission format) includes an MCS, an RV, multi-input multi-output (MIMO) precoding matrix information, etc. An actual physical-layer resource allocation of each cooperative transmission resource within each periodicity of the cooperative transmission resource, including a time-frequency resource location, a transmission format (such as MCS, RV), etc., is determined by the terminal based on the configuration information of the physical-layer resource.

(6) A reference network node indication. The reference network node indication is used to indicate a reference network node (such as a reference cell or a reference TRP). The actual physical-layer resource allocation for the pre-configured cooperative transmission resource is determined based on an uplink and downlink resource configuration of the reference network node. For example, an absolute location of physical-layer time-frequency resources for the cooperative transmission resource is determined based on the uplink and downlink resource configuration of the reference network node and the physical-layer resource configuration information of the cooperative transmission resource carried in the pre-configured signaling.

In some embodiments, the reference network node indication may be an identity of the reference network node, such as a cell identity of a reference cell, a TRP identity of a reference TRP, etc.

For example, assuming that Cell 1 and Cell 2 participate in cooperative transmission, where a downlink frequency and a bandwidth of Cell 1 are F1 and BW1 respectively, and the reference cell is Cell 1. The resources for actually reception and transmission are determined by the terminal based on the downlink frequency configuration of Cell 1 and the configuration information of the physical-layer resource for the cooperative transmission resource. Cell 2 needs to obtain downlink resource configuration of Cell 1 and combine the downlink resource configuration of Cell 1 with the configuration information of the physical-layer resource for the cooperative transmission resource to determine the transmission resource and participate in downlink transmission. Cell 1 performs downlink transmission based on its own downlink resource configuration combined with the configuration information of the physical-layer resource for the cooperative transmission resource.

(7) A pre-configured resource type indication. The pre-configured resource type indication is used to indicate that the currently configured pre-configured resources are resources for cooperative transmission.

(8) Information of network nodes participating in cooperative transmission. The information of network nodes participating in cooperative transmission is used to indicate the network nodes participating in cooperative transmission, such as cells or TRPs participating in cooperative transmission.

In some embodiments, the information of network nodes participating in cooperative transmission may be identities of the network nodes participating in cooperative transmission, such as cell identities or TRP identities, etc.

(9) An identity for scrambling cooperative transmission.

For example, the identity is a radio network temporary identity (RNTI) x-RNTI dedicated to scrambling the cooperative transmission or a network-side high-layer identity, etc. Descrambling (downlink) or scrambling (uplink) of the received signal is performed by the terminal based on the identity, to perform transmission that can be uniquely identified by both the network side and the terminal side.

In some embodiments, the first network node includes any of the following.

### (1) A primary cell in carrier aggregation (CA).

For example, the RRC signaling is received by the terminal from the primary cell in CA, and the RRC signaling is used to pre-configure a cooperative transmission resource. The pre-configured cooperative transmission resource is: a downlink resource used for sending or participating in sending downlink data by other cells or TRPs (i.e., primary cells not in the CA), or an uplink resource used for receiving uplink data by other cells or TRPs.

### (2) A primary cell of a master base station in dual connectivity (DC).

For example, the RRC signaling is received by the terminal from the primary cell of the master base station in DC, and the RRC signaling is used to pre-configure the cooperative transmission resource. The pre-configured cooperative transmission resource is: a downlink resource used for sending or participating in sending downlink data by other cells or TRPs (i.e., primary cells of the master base station not in the DC), and an uplink resource used for receiving uplink data by other cells or TRPs.

### (3) A primary cell of a secondary base station in DC.

For example, the RRC signaling is received by the terminal from the primary cell of the secondary base station in DC, and the RRC signaling is used to pre-configure the cooperative transmission resource. The pre-configured cooperative transmission resource is: a downlink resource used for sending or participating in sending downlink data by other cells or TRPs (i.e., primary cells of the secondary base station not in the DC), and an uplink resource used for receiving uplink data by other cells or TRPs.

### (4) A primary cell in a timing advance group (TAG).

For example, the RRC signaling is received by the terminal from a primary cell in a TAG, and the RRC signaling is used to pre-configure the cooperative transmission resource. The pre-configured cooperative transmission resource is: a downlink resource used for sending or participating in sending downlink data by other cells or TRPs (i.e., primary cells not in the TAG), and an uplink resource used for receiving uplink data by other cells or TRPs.

### (5) Any cell or any transmission/reception point (TRP) currently connected to the terminal.

For example, the RRC signaling is received by the terminal from any cell or any TRP currently connected, and the RRC signaling is used to pre-configure the cooperative transmission resource. The pre-configured cooperative transmission resource is: a downlink resource used for sending or participating in sending downlink data by other cells or TRPs (i.e., not the currently connected cells or TRPs), and an uplink resource used for receiving uplink data by other cells or TRPs.

(6) A distributed data unit connected to any TRP currently connected to the terminal. The distributed data unit may be a DU or a DDU.

For example, the RRC signaling is received by the terminal from a DU or DDU connected to any TRP currently connected, and the RRC signaling is used to pre-configure the cooperative transmission resource. The pre-configured cooperative transmission resource is: a downlink resource used for sending or participating in sending downlink data by other cells or TRPs (i.e., not the currently connected TRPs), and an uplink resource used for receiving uplink data by other cells or TRPs.

(7) A source cell or a source TRP performing cooperative transmission.

The source cell or the source TRP refers to a dominant cell or a dominant TRP performing cooperative transmission. Relatively, other cells or TRPs participating in cooperative transmission mainly assist the source cell or the source TRP in performing uplink and downlink data transmission.

For example, the RRC signaling is received by the terminal from the source cell or the source TRP performing cooperative transmission, and the RRC signaling is used to pre-configure a cooperative transmission resource. The pre-configured cooperative transmission resource is: a downlink resource used for sending or participating in sending downlink data by other cells or TRPs (i.e., not the source cells or not the source TRPs), and an uplink resource used for receiving uplink data by other cells or TRPs.

(8) A distributed data unit connected to a source TRP performing cooperative transmission. The distributed data unit may be a DU or a DDU.

For example, the RRC signaling is received by the terminal from a DU or DDU connected to the source TRP performing cooperative transmission, and the RRC signaling is used to pre-configure a cooperative transmission resource. The pre-configured cooperative transmission resource is: a downlink resource used for sending or participating in sending downlink data by other cells or TRPs (i.e., not the source TRPs), and an uplink resource used for receiving uplink data by other cells or TRPs.

A specific determination method for the information used to pre-configure a cooperative transmission resource (also referred to as pre-configuration information of cooperative transmission resource) contained in the RRC signaling sent from the first network node is not limited by the present application. For example, the pre-configuration information may be sent to the terminal after being determined by the first network node, and meanwhile, the pre-configuration information may also be sent from the first network node to other network nodes participating in cooperative transmission. For another example, the pre-configuration information may be sent to the first network node after being determined by other network nodes, and meanwhile, the pre-configuration information may also be sent from the other network nodes to other network nodes participating in cooperative transmission. A common understanding of the pre-configured cooperative transmission resource needs to be maintained among the various network nodes participating in cooperative transmission.

According to the method for data transmission provided by the embodiments of the present application, resources used for cooperative transmission are pre-configured for the terminal by the network side. Downlink data reception or uplink data sending is performed by the terminal based on the pre-configured cooperative transmission resource. Even if there is a transmission delay in signaling interaction between different cells or TRPs, or there is a timing synchronization difference between different cells or TRPs, cooperative transmission for one terminal by different cells or TRPs is achieved, and transmission performance is improved.

In some embodiments, the method further includes:
receiving a physical downlink control channel (PDCCH) order sent from a second network node, where the PDCCH order is used to activate the cooperative transmission resource.

In some embodiments, the cooperative transmission resource is in an active state after being pre-configured by the network side through the RRC signaling, and the cooperative transmission resource may be used by the terminal to perform uplink and downlink data transmission. In some embodiments, an initial state of the cooperative transmission resource is inactive after being pre-configured by the network side through the RRC signaling, and the cooperative transmission resource is activated by the network side through a PDCCH order.

In some embodiments, downlink control information (DCI) is included in the PDCCH order. As an example, other signaling, messages, or commands well known to those skilled in the art that can implement the PDCCH order of the present disclosure may also be applied, which is not limited herein.

In some embodiments, the PDCCH order includes one or more pieces of following information.
(1) information on valid time of the cooperative transmission resource. The information on valid time may be used to determine the actual time at which the cooperative transmission resource is validated.

In some embodiments, the information on valid time of the cooperative transmission resource includes:
an absolute valid time of the cooperative transmission resource; or,
a time offset of an absolute valid time of the cooperative transmission resource relative to a sending time of the information on valid time.

In some embodiments, the PDCCH order includes the DCI. For example, the absolute valid time of the pre-configured cooperative transmission resource is indicated by the DCI, and the actual valid time of the cooperative transmission resource is determined by the terminal based on the absolute valid time. The absolute valid time may be a value represented in units of year, month, day, hour, minute, second, or millisecond, etc. or may be a value represented by a system frame number, a subframe number, or a slot number.

For another example, a time offset deltaT of an absolute valid time of the pre-configured cooperative transmission resource relative to a sending time of the DCI is indicated by the DCI. When the DCI is received by the terminal, the sending time of the DCI is determined, and the actual valid time of the cooperative transmission resource is determined by adding the time offset value indicated in the DCI to the sending time of the DCI.

(2) A number of the cooperative transmission resources within each periodicity of the cooperative transmission resource.

For example, assuming that the number of the cooperative transmission resources pre-configured by the PDCCH order within each periodicity of the cooperative transmission resource is N, the terminal determines that there are N consecutive pre-configured resources within each periodicity of the cooperative transmission resource starting from the start time of each cooperative transmission resource. If the pre-configured cooperative transmission resource is validated for one time, the number of the cooperative transmission resources is determined as N.

(3) A valid number of times of the cooperative transmission resource.

For example, assuming that the valid number of times of the cooperative transmission resource is indicated as K by the PDCCH order, the terminal determines that the cooperative transmission resource is validated for a specified number of times (i.e., K times), or determines that the cooperative transmission resource is validated within K periodicities (i.e., the valid number of times may also be understood as the number of valid periodicities).

In some embodiments, if the valid number of times of the cooperative transmission resource is not configured and the periodicity of the cooperative transmission resource is not configured in both the RRC signaling used for pre-configuring the cooperative transmission resource and the PDCCH order used for activating the cooperative transmission resource, the cooperative transmission resource is validated for one time.

(4) Allocation information of a physical-layer resource for the cooperative transmission resource.

The allocation information of the physical-layer resource includes information such as time-frequency resource allocation and a transmission mode. The transmission mode (also referred to as a transmission format) includes an MCS, an RV, etc. An actual physical-layer resource allocation of each cooperative transmission resource within each periodicity of the cooperative transmission resource, including a time-frequency resource location, a transmission format (such as MCS, RV), etc., is determined by the terminal based on the allocation information of the physical-layer resource.

(5) A reference network node indication. The reference network node indication is used to indicate a reference network node (such as a reference cell or a reference TRP). An actual physical-layer resource allocation for the pre-configured cooperative transmission resource may be determined based on an uplink and downlink resource configuration of the reference network node. For example, an absolute location of physical-layer time-frequency resources for the cooperative transmission resource is determined based on the uplink and downlink resource configuration of the reference network node and the allocation information of a physical-layer resource for the cooperative transmission resource carried in the activation order.

In some embodiments, the reference network node indication may be an identity of the reference network node, such as a cell identity of a reference cell or a TRP identity of a reference TRP.

For example, assuming that Cell 1 and Cell 2 participate in cooperative transmission, where a downlink frequency and a bandwidth of Cell 1 are F1 and BW1 respectively, and the reference cell is Cell 1. The resources for actually reception and transmission are determined by the terminal based on the downlink frequency configuration of Cell 1 and allocation information of the physical-layer resource for the cooperative transmission resource in an activation order. Cell 2 needs to obtain downlink resource allocation of Cell 1 and combine the downlink resource allocation of Cell 1 with the allocation information of a physical-layer resource for the cooperative transmission resource in the activation order to determine the transmission resource and participate in downlink transmission. Cell 1 performs downlink transmission based on its own downlink resource configuration combined with the configuration information of the physical-layer resource for the cooperative transmission resource in the activation order.

(6) Information of network nodes participating in cooperative transmission. The information of network nodes participating in cooperative transmission is used to indicate the network nodes participating in cooperative transmission, such as cells or TRPs participating in cooperative transmission.

In some embodiments, the information of network nodes participating in cooperative transmission may be identities of the network nodes participating in cooperative transmission, such as cell identities or TRP identities.

In some embodiments, the second network node includes any of the following:
a primary cell in CA;
a primary cell of a master base station in DC;
a primary cell of a secondary base station in DC;
a primary cell in a TAG;
any cell or any TRP currently connected to the terminal;
a distributed data unit connected to any TRP currently connected to the terminal;
a source cell or a source TRP performing cooperative transmission;
a distributed data unit connected to a source TRP performing cooperative transmission.

In an embodiment, the second network node and the first network node are the same network node, or, the second network node and the first network node are different network nodes.

In some embodiments, the method further includes:
determining any of the following times as a valid time of the cooperative transmission resource.
(1) A sending time or a reception time of the RRC signaling.

For example, after the RRC signaling used for pre-configuring the cooperative transmission resource is received by the terminal, the sending time of the RRC signaling is determined, and the sending time of the RRC signaling is determined as the actual valid time of the cooperative transmission resource.

For example, after the RRC signaling used for pre-configuring the cooperative transmission resource is received by the terminal, the time at which the RRC signaling is received is determined as the actual valid time of the cooperative transmission resource.

In some embodiments, the sending time of the RRC signaling is taken as the actual valid time of the cooperative transmission resource by the network side, and the reception time of the RRC signaling is taken as the actual valid time of the cooperative transmission resource by the terminal side.

In case that the sending time or the reception time of the RRC signaling is taken as the valid time of the cooperative transmission resource, specific resource allocation information needs to be included in the RRC signaling, i.e., configured and activated through the RRC signaling.

(2) A time indicated by information on valid time of the cooperative transmission resource in the RRC signaling.

For example, the absolute valid time of the cooperative transmission resource indicated in the RRC signaling is taken as the actual valid time of the cooperative transmission resource by the terminal; or, when the RRC signaling is received by the terminal, the sending time of the RRC signaling is determined, and the actual valid time of the cooperative transmission resource is determined by adding the time offset value indicated in the RRC signaling to the sending time of the RRC signaling. In some embodiments, the time offset value may also be specified by a protocol.

(3) A sending time or a reception time of a PDCCH order used to activate the cooperative transmission resource.

For example, after the PDCCH order used for activating the cooperative transmission resource is received by the terminal, the sending time of the PDCCH order is determined, and the sending time of the PDCCH order is determined as the actual valid time of the cooperative transmission resource.

For example, after the PDCCH order used for activating the cooperative transmission resource is received by the terminal, the time at which the PDCCH order is received is determined as the actual valid time of the cooperative transmission resource.

In some embodiments, the sending time of the PDCCH order is taken as the actual valid time of the cooperative transmission resource by the network side, and the reception time of the PDCCH order is taken as the actual valid time of the cooperative transmission resource by the terminal side.

(4) A time indicated by information on valid time of the cooperative transmission resource in a PDCCH order used to activate the cooperative transmission resource.

For example, the absolute valid time of the cooperative transmission resource indicated in the PDCCH order is taken as the actual valid time of the cooperative transmission resource by the terminal; or, when the PDCCH order is received by the terminal, the sending time of the PDCCH order is determined, and the actual valid time of the cooperative transmission resource is determined by adding the time offset value indicated in the PDCCH order to the sending time of the PDCCH order. In some embodiments, the time offset value may also be specified by a protocol.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In an embodiment, the actual physical-layer resource allocation (the absolute location of physical-layer time-frequency resources) used for cooperative transmission needs to be determined based on an uplink and downlink resource configuration of a specific network node, which is referred to as the third network node. It can be understood that the actual physical-layer resource allocation for the cooperative transmission resource corresponds to or is associated with the third network node.

For example, a physical-layer resource is allocated for the cooperative transmission resource by the RRC signaling, and time-frequency resource allocation of the cooperative transmission resource is performed by the terminal based on an uplink and downlink frequency resource configuration of a cell or a TRP sending the RRC signaling. That is, the time-frequency resource allocation specified in the RRC signaling corresponds to the cell or TRP sending the RRC signaling.

For example, a physical-layer resource is allocated for the cooperative transmission resource by the RRC signaling, and a reference cell or a reference TRP is specified in the RRC signaling. Time-frequency resource allocation for the cooperative transmission resource is performed by the terminal based on an uplink and downlink frequency resource configuration of the reference cell or the reference TRP. That is, the time-frequency resource allocation specified in the RRC signaling corresponds to the reference cell or reference TRP specified in the RRC signaling.

For example, a physical-layer resource is allocated for the cooperative transmission resource by the PDCCH order, and time-frequency resource allocation of the cooperative transmission resource is performed by the terminal based on an uplink and downlink frequency resource configuration of a cell or a TRP sending the PDCCH order. That is, the time-frequency resource allocation specified in the PDCCH order corresponds to the cell or TRP sending the PDCCH order.

For example, a physical-layer resource is allocated for the cooperative transmission resource by the PDCCH order, and a reference cell or a reference TRP is specified in the RRC signaling. Time-frequency resource allocation of the cooperative transmission resource is performed by the terminal based on an uplink and downlink frequency resource configuration of the reference cell or the reference TRP. That is, the time-frequency resource allocation specified in the PDCCH order corresponds to the reference cell or reference TRP specified in the RRC signaling.

For example, a physical-layer resource is allocated for the cooperative transmission resource by the PDCCH order, and a reference cell or a reference TRP is specified in the PDCCH order. Time-frequency resource allocation of the cooperative transmission resource is performed by the terminal based on an uplink and downlink frequency resource configuration of the reference cell or the reference TRP. That is, the time-frequency resource allocation specified in the PDCCH order corresponds to the reference cell or reference TRP specified in the PDCCH order.

In some embodiments, the method further includes:
determining the third network node as a timing synchronization reference network node.

In an embodiment, in order to perform timing synchronization better, a timing synchronization relationship of downlink transmission or uplink transmission may be determined by the network side and the terminal side based on the same timing synchronization reference network node. In some embodiments, the third network node (e.g., the cell or TRP corresponding to the cooperative transmission resource allocation as described above) may be taken as the timing synchronization reference network node.

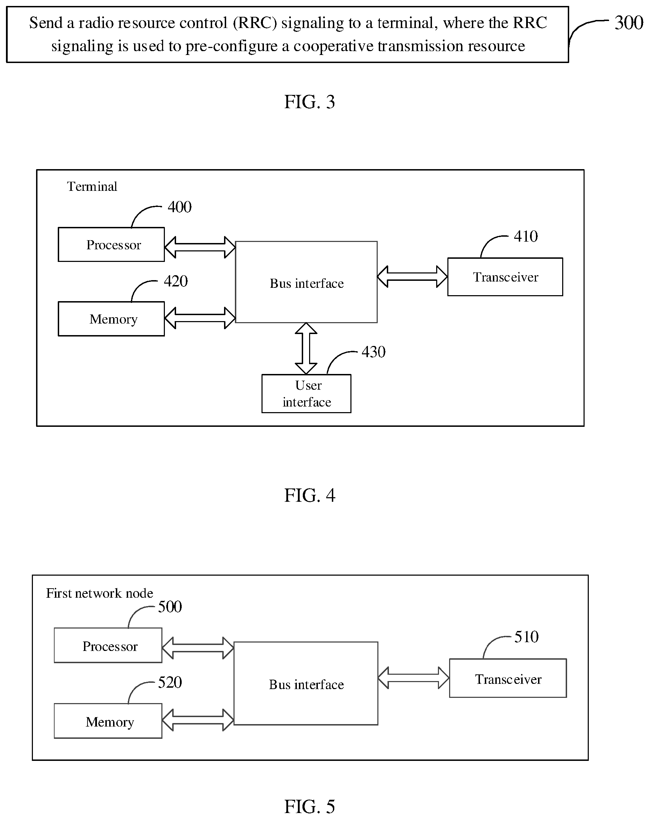

FIG. 3 is a schematic flowchart of a method for cooperative transmission resource allocation according to an embodiment of the present application. The method is performed by a first network node. As shown in FIG. 3, the method includes the following steps.

Step 300: sending a radio resource control (RRC) signaling to a terminal, where the RRC signaling is used to pre-configure a cooperative transmission resource.

In an embodiment, the cooperative transmission resource is resource used for cooperative transmission, and refer to: a downlink resource used for sending or participating in sending downlink data by other cells or other TRPs (i.e., not the current cells or not the current TRPs), and an uplink resource used for receiving uplink data by other cells or other TRPs.

In some embodiments, the cooperative transmission resource is a periodically validated resource, a one-time validated resource, or a resource validated for a specified number of times.

In the embodiments of the present application, cooperative transmission resource is pre-configured for the terminal through RRC signaling by the network side. After the pre-configured cooperative transmission resource is configured by the network side, at a time at which the pre-configured cooperative transmission resource is validated, downlink data is received or uplink data is sent from the terminal based on a physical-layer resource and a transmission format allocated for the pre-configured cooperative transmission resource. Correspondingly, at the time at which the pre-configured cooperative transmission resource is validated, downlink data is sent or uplink data is received by each cell or TRP of the network side participating in the cooperative transmission, based on the physical-layer resource and the transmission format allocated in the pre-configured cooperative transmission resource. In this way, even if there is a transmission delay in signaling interaction between different cells or TRPs, or there is a timing synchronization difference between different cells or TRPs, cooperative transmission for one terminal by different cells or TRPs is achieved.

In some embodiments, the RRC signaling includes one or more pieces of following information.
(1) Information on valid time of the cooperative transmission resource. The information on valid time is used to determine the actual time at which the cooperative transmission resource is validated.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

For example, an absolute valid time of the cooperative transmission resource is pre-configured by the RRC signaling, and the actual valid time of the cooperative transmission resource is determined by the terminal based on the absolute valid time. The absolute valid time may be a value represented in units of year, month, day, hour, minute, second, or millisecond, etc. or may be a value represented by a system frame number, a subframe number, or a slot number.

For another example, a time offset deltaT of an absolute valid time of the cooperative transmission resource relative to a sending time of the RRC signaling is pre-configured by the RRC signaling. When the RRC signaling is received by the terminal, the sending time of the RRC signaling is determined, and the actual valid time of the cooperative transmission resource is determined by adding the pre-configured time offset value in the RRC signaling to the sending time of the RRC signaling.

(2) Periodicity of the cooperative transmission resource.

For example, the cooperative transmission resource pre-configured by the RRC signaling is periodically validated resource, and a start time of each cooperative transmission resource is periodically determined by the terminal based on the valid time of the cooperative transmission resource and the periodicity of the cooperative transmission resource.

(3) A number of the cooperative transmission resources within each periodicity of the cooperative transmission resource. The periodicity of the cooperative transmission resource is a periodicity of the pre-configured cooperative transmission resource.

For example, assuming that the number of the cooperative transmission resources pre-configured by the RRC signaling within each periodicity of the cooperative transmission resource is N, the terminal determines that there are N consecutive pre-configured resources within each periodicity of the cooperative transmission resource starting from the start time of each cooperative transmission resource. If the pre-configured cooperative transmission resource is validated for one time, the number of the pre-configured cooperative transmission resource is determined as N.

(4) A valid number of times of the cooperative transmission resource.

For example, assuming that the valid number of times of the cooperative transmission resource is pre-configured as K by the RRC signaling, the terminal determines that the cooperative transmission resource is validated for a specified number of times (i.e., K times), or determines that the cooperative transmission resource is validated within K periodicities (i.e., the valid number of times can also be understood as the number of valid periodicities).

(5) Configuration information of a physical-layer resource for the cooperative transmission resource.

The configuration information of the physical-layer resource includes information such as time-frequency resource configuration and a transmission mode. The transmission mode (also referred to as a transmission format) includes an MCS, an RV, multi-input multi-output (MIMO) precoding matrix information, etc. An actual physical-layer resource allocation of each cooperative transmission resource within each periodicity of the cooperative transmission resource, including a time-frequency resource location, a transmission format (such as MCS, RV), etc., is determined by the terminal based on the configuration information of the physical-layer resource.

(6) A reference network node indication. The reference network node indication is used to indicate a reference network node (such as a reference cell or a reference TRP). The actual physical-layer resource allocation for the pre-configured cooperative transmission resource is determined based on an uplink and downlink resource configuration of the reference network node. For example, an absolute location of physical-layer time-frequency resources for the cooperative transmission resource is determined based on the uplink and downlink resource configuration of the reference network node and the physical-layer resource configuration information of the cooperative transmission resource carried in the pre-configured signaling.

In some embodiments, the reference network node indication may be an identity of the reference network node, such as a cell identity of a reference cell, a TRP identity of a reference TRP, etc.

For example, assuming that Cell 1 and Cell 2 participate in cooperative transmission, where a downlink frequency and a bandwidth of Cell 1 are F1 and BW1 respectively, and the reference cell is Cell 1. The resources for actually reception and transmission are determined by the terminal based on the downlink frequency configuration of Cell 1 and the configuration information of the physical-layer resource of the cooperative transmission resource. Cell 2 needs to obtain the downlink resource configuration of Cell 1 and combine the downlink resource configuration of Cell 1 with the configuration information of the physical-layer resource for the cooperative transmission resource to determine the transmission resource and participate in downlink transmission. Cell 1 performs downlink transmission based on its own downlink resource configuration combined with the configuration information of the physical-layer resource for the cooperative transmission resource.

(7) A pre-configured resource type indication. The pre-configured resource type indication is used to indicate that the currently configured pre-configured resources are resources used for cooperative transmission.

(8) Information of network nodes participating in cooperative transmission. The information of network nodes participating in cooperative transmission is used to indicate the network nodes participating in cooperative transmission, such as cells or TRPs participating in cooperative transmission.

In some embodiments, the information of network nodes participating in cooperative transmission may be identities of the network nodes participating in cooperative transmission, such as cell identities or TRP identities, etc.

(9) An identity for scrambling cooperative transmission.

For example, the identity is a radio network temporary identity (RNTI) x-RNTI dedicated to scrambling the cooperative transmission or a network-side high-layer identity, etc. Descrambling (downlink) or scrambling (uplink) of the received signal is performed by the terminal based on the identity, to perform transmission that can be uniquely identified by both the network side and the terminal side.

In some embodiments, the first network node includes any of the following.
(1) A primary cell in carrier aggregation (CA).

For example, the RRC signaling is received by the terminal from the primary cell in CA, and the RRC signaling is used to pre-configure a cooperative transmission resource. The pre-configured cooperative transmission resource is: a downlink resource used for sending or participating in sending downlink data by other cells or TRPs (i.e., primary cells not in the CA), or an uplink resource used for receiving uplink data by other cells or TRPs.

(2) A primary cell of a master base station in dual connectivity (DC).

For example, the RRC signaling is received by the terminal from the primary cell of the master base station in DC, and the RRC signaling is used to pre-configure a cooperative transmission resource. The pre-configured cooperative transmission resource is: a downlink resource used for sending or participating in sending downlink data by other cells or TRPs (i.e., primary cells of the master base station not in the DC), and an uplink resource used for receiving uplink data by other cells or TRPs.

(3) A primary cell of a secondary base station in DC.

For example, the RRC signaling is received by the terminal from the primary cell of the secondary base station in DC, and the RRC signaling is used to pre-configure a cooperative transmission resource. The pre-configured cooperative transmission resource is: a downlink resource used for sending or participating in sending downlink data by other cells or TRPs (i.e., primary cells of the secondary base station not in the DC), or an uplink resource used for receiving uplink data by other cells or TRPs.

(4) A primary cell in a timing advance group (TAG).

For example, the RRC signaling is received by the terminal from a primary cell within a TAG, and the RRC signaling is used to pre-configure a cooperative transmission resource. The pre-configured cooperative transmission resource is: a downlink resource used for sending or participating in sending downlink data by other cells or TRPs (i.e., primary cells not in the TAG), or an uplink resource used for receiving uplink data by other cells or TRPs.

(5) Any cell or any transmission/reception point (TRP) currently connected to the terminal.

For example, the RRC signaling is received by the terminal from any cell or any TRP currently connected, and the RRC signaling is used to pre-configure the cooperative transmission resource. The pre-configured cooperative transmission resource is: a downlink resource used for sending or participating in sending downlink data by other cells or TRPs (i.e., not the currently connected cells or TRPs), and an uplink resource used for receiving uplink data by other cells or TRPs.

(6) A distributed data unit connected to any TRP currently connected to the terminal. The distributed data unit may be a DU or a DDU.

For example, the RRC signaling is received by the terminal from a DU or DDU connected to any TRP currently connected, and the RRC signaling is used to pre-configure the cooperative transmission resource. The pre-configured cooperative transmission resource is: a downlink resource used for sending or participating in sending downlink data by other cells or TRPs (i.e., not the currently connected TRPs), and an uplink resource used for receiving uplink data by other cells or TRPs.

(7) A source cell or a source TRP performing cooperative transmission.

The source cell or the source TRP refers to a dominant cell or a dominant TRP performing cooperative transmission. Relatively, other cells or TRPs participating in cooperative transmission mainly assist the source cell or the source TRP in performing uplink and downlink data transmission.

For example, the RRC signaling is received by the terminal from the source cell or the source TRP performing cooperative transmission, and the RRC signaling is used to pre-configure a cooperative transmission resource. The pre-configured cooperative transmission resource is: a downlink resource used for sending or participating in sending downlink data by other cells or TRPs (i.e., not the source cells or not the source TRPs), and an uplink resource used for receiving uplink data by other cells or TRPs.

(8) A distributed data unit connected to a source TRP performing cooperative transmission. The distributed data unit may be a DU or a DDU.

For example, the RRC signaling is received by the terminal from a DU or DDU connected to the source TRP performing cooperative transmission, and the RRC signaling is used to pre-configure a cooperative transmission resource. The pre-configured cooperative transmission resource is: a downlink resource used for sending or participating in sending downlink data by other cells or TRPs (i.e., not the source TRPs), and an uplink resource used for receiving uplink data by other cells or TRPs.

A specific determination method for the information used to pre-configure a cooperative transmission resource (also referred to as pre-configuration information of cooperative transmission resource) contained in the RRC signaling sent from the first network node is not limited by the present application. For example, the pre-configuration information may be sent to the terminal after being determined by the first network node, and meanwhile, the pre-configuration information may also be sent from the first network node to other network nodes participating in cooperative transmission. For another example, the pre-configuration information may be sent to the first network node after being determined by other network nodes, and meanwhile, the pre-configuration information may also be sent from the other network nodes to other network nodes participating in cooperative transmission. A common understanding of the pre-configured cooperative transmission resource needs to be maintained among the various network nodes participating in cooperative transmission.

According to the method for data transmission provided by the embodiments of the present application, resources used for cooperative transmission are pre-configured for the terminal by the network side. Downlink data reception or uplink data sending is performed by the terminal based on the pre-configured cooperative transmission resource. Even if there is a transmission delay in signaling interaction between different cells or TRPs, or there is a timing synchronization difference between different cells or TRPs, cooperative transmission for one terminal by different cells or TRPs is achieved, and transmission performance is improved.

In some embodiments, the method further includes:
sending a physical downlink control channel (PDCCH) order to the terminal, where the PDCCH order is used to activate the cooperative transmission resource.

In some embodiments, the cooperative transmission resource is in an active state after being pre-configured by the network side through the RRC signaling, and the cooperative transmission resource may be used by the terminal to perform uplink and downlink data transmission. In some embodiments, an initial state of the cooperative transmission resource is inactive after being pre-configured by the network side through the RRC signaling, and the cooperative transmission resource is activated by the network side through a PDCCH order.

In some embodiments, the PDCCH order includes one or more pieces of following information.
(1) Information on valid time of the cooperative transmission resource. The information on valid time may be used to determine the actual time at which the cooperative transmission resource is validated.

In some embodiments, the information on valid time of the cooperative transmission resource includes:
an absolute valid time of the cooperative transmission resource; or,
a time offset of an absolute valid time of the cooperative transmission resource relative to a sending time of the information on valid time.

For example, the absolute valid time of the pre-configured cooperative transmission resource is indicated by the DCI, and the actual valid time of the cooperative transmission resource is determined by the terminal based on the absolute valid time. The absolute valid time may be a value represented in units of year, month, day, hour, minute, second, or millisecond, or may be a value represented by a system frame number, a subframe number, or a slot number.

For another example, a time offset deltaT of an absolute valid time of the pre-configured cooperative transmission resource relative to a sending time of the DCI is indicated by the DCI. When the DCI is received by the terminal, the sending time of the DCI is determined, and the actual valid time of the cooperative transmission resource is determined by adding the time offset value indicated in the DCI to the sending time of the DCI.

(2) A number of the cooperative transmission resources within each periodicity of the cooperative transmission resource.

For example, assuming that the number of the cooperative transmission resources pre-configured by the PDCCH order within each periodicity of the cooperative transmission resource is N, the terminal determines that there are N consecutive pre-configured resources within each periodicity of the cooperative transmission resource starting from the start time of each cooperative transmission resource. If the pre-configured cooperative transmission resource is validated for one time, the number of the cooperative transmission resources is determined as N.

(3) A valid number of times of the cooperative transmission resources.

For example, assuming that the valid number of times of the cooperative transmission resource is indicated as K by the PDCCH order, the terminal determines that the cooperative transmission resource is validated for a specified number of times (i.e., K times), or determines that the cooperative transmission resource is validated within K periodicities (i.e., the valid number of times may also be understood as the number of valid periodicities).

In some embodiments, if the valid number of times of the cooperative transmission resource is not configured and the periodicity of the cooperative transmission resource is not configured in both the RRC signaling used for pre-configuring the cooperative transmission resource and the PDCCH order used for activating the cooperative transmission resource, the cooperative transmission resource is validated for one time.

(4) Allocation information of a physical-layer resource for the cooperative transmission resource.

The allocation information of the physical-layer resource includes information such as time-frequency resource allocation and a transmission mode. The transmission mode (also referred to as a transmission format) includes an MCS, an RV, etc. An actual physical-layer resource allocation of each cooperative transmission resource within each periodicity of the cooperative transmission resource, including a time-frequency resource location, a transmission format (such as MCS, RV), etc., is determined by the terminal based on the allocation information of physical-layer resources.

(5) A reference network node indication. The reference network node indication is used to indicate a reference network node (such as a reference cell or a reference TRP). An actual physical-layer resource allocation for the pre-configured cooperative transmission resource may be determined based on an uplink and downlink resource configuration of the reference network node. For example, an absolute location of physical-layer time-frequency resources for the cooperative transmission resource is determined based on the uplink and downlink resource configuration of the reference network node and the allocation information of a physical-layer resource for the cooperative transmission resource carried in the activation order.

In some embodiments, the reference network node indication may be an identity of the reference network node, such as a cell identity of a reference cell or a TRP identity of a reference TRP.

For example, assuming that Cell 1 and Cell 2 participate in cooperative transmission, where a downlink frequency and a bandwidth of Cell 1 are F1 and BW1 respectively, and the reference cell is Cell 1. The resources for actually reception and transmission are determined by the terminal based on the downlink frequency configuration of Cell 1 and allocation information of the physical-layer resource for the cooperative transmission resource in an activation order. Cell 2 needs to obtain the downlink resource allocation of Cell 1 and combine it with the allocation information of a physical-layer resource for the cooperative transmission resource in the activation order to determine the transmission resource and participate in downlink transmission. Cell 1 performs downlink transmission based on its own downlink resource configuration combined with the configuration information of the a physical-layer resource for the cooperative transmission resource in the activation order.

(6) Information of network nodes participating in cooperative transmission. The information of network nodes participating in cooperative transmission is used to indicate the network nodes participating in cooperative transmission, such as cells or TRPs participating in cooperative transmission.

In some embodiments, the information of network nodes participating in cooperative transmission may be identities of the network nodes participating in cooperative transmission, such as cell identities or TRP identities.

In some embodiments, the method further includes:
interacting pre-configuration information and/or activation information of the cooperative transmission resource with other network nodes participating in cooperative transmission through an interface between distributed data units, an interface between a central control-plane node and a distributed data unit, or an interface between base stations.

In an embodiment, a common understanding of the pre-configured cooperative transmission resource needs to be maintained among the various network nodes participating in cooperative transmission, and there may be multiple specific ways to interact with the cooperative transmission resource information.

For example, if the cells or TRPs participating in cooperative transmission belong to different distributed units (DUs or DDUs), the pre-configuration information and/or activation information of the cooperative transmission resource is interacted through an interface between the distributed units.

For example, if the cells or TRPs participating in cooperative transmission belong to different distributed units (DUs or DDUs), the pre-configuration information and/or activation information of the cooperative transmission resource is interacted by a central control-plane node (CU or CCU) through an interface (similar to the F1 interface of 5G) between the central control-plane node and the distributed units.

For example, if the cells or TRPs participating in cooperative transmission belong to different base stations, the pre-configuration information and/or activation information of the cooperative transmission resource is interacted through an inter-base station interface (similar to the Xn interface of 5G).

In some embodiments, the method further includes:
determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In an embodiment, the actual physical-layer resource allocation (the absolute location of physical-layer time-frequency resources) used for cooperative transmission needs to be determined based on an uplink and downlink resource configuration of a specific network node, which is referred to as the third network node. It can be understood that the actual physical-layer resource allocation of the cooperative transmission resource corresponds to or is associated with the third network node.

For example, a physical-layer resource is allocated for the cooperative transmission resource by the RRC signaling. The time-frequency resource allocation of the cooperative transmission resource is determined by the network side based on an uplink and downlink frequency resource configuration of a cell or a TRP sending the RRC signaling; or the time-frequency resource allocation of the cooperative transmission resource is determined based on an uplink and downlink frequency resource configuration of a reference cell or a reference TRP specified in the RRC signaling.

For example, a physical-layer resource is allocated for the cooperative transmission resource by the PDCCH order, and time-frequency resource allocation of the cooperative transmission resource is determined by the network side based on an uplink and downlink frequency resource configuration of a cell or a TRP sending the PDCCH order; or, the time-frequency resource allocation of the cooperative transmission resource is determined based on an uplink and downlink frequency resource configuration of a reference cell or a reference TRP specified in the RRC signaling; or, the time-frequency resource allocation of the cooperative transmission resource is determined based on an uplink and downlink frequency resource configuration of a reference cell or a reference TRP specified in the PDCCH order.

In some embodiments, the method further includes:
determining the third network node as a timing synchronization reference network node.

In an embodiment, in order to perform timing synchronization better, a timing synchronization relationship of downlink transmission or uplink transmission can be determined by the network side and the terminal side based on the same timing synchronization reference network node. In some embodiments, the third network node may be taken as the timing synchronization reference network node.

The methods provided by the embodiments of the present application are based on the same inventive concept; therefore, the implementation of each method may refer to one another, and repetitive descriptions are not detailed again.

The methods provided by the above embodiments of the present application are illustrated below through examples of specific application scenarios.

Example 1: Cooperative transmission resource is pre-configured and activated by a RRC signaling, and the cooperative transmission resource is periodically validated.

A base station side procedure is described below.

Step 1: The base station side sends a RRC signaling to the terminal, where the RRC signaling is used to pre-configure a cooperative transmission resource.
(1) A base-station-side node sending the RRC signaling is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The RRC signaling includes one or more pieces of following information.
   a) An absolute valid time of the cooperative transmission resource.
   b) A time offset deltaT of a valid time of the cooperative transmission resource relative to a sending time of the RRC signaling (optional, mutually exclusive with a)).
   c) Periodicity of the cooperative transmission resource (mandatory).
   d) A number of pre-configured resources N within each periodicity of the cooperative transmission resource (optional).
   e) Configuration of a physical-layer resource for the cooperative transmission resource, including time-frequency resource configuration, and/or a transmission mode (MCS, RV), etc. (mandatory).
   f) A reference cell or a reference TRP (optional).
   g) A pre-configured resource type indication (optional), indicating that the currently configured pre-configured resources are resources used for cooperative transmission.
   h) Cells or TRPs participating in the cooperative transmission (optional).
   i) An identity for scrambling the cooperative transmission (optional), such as an x-RNTI or a network-side high-layer identity.

Step 2: At the time at which the cooperative transmission resource is validated, cells or TRPs participating in the cooperative transmission on the base station side, send downlink transmissions or receive uplink transmissions based on the physical-layer resource and the transmission format allocated for the cooperative transmission resource. The timing synchronization relationship of the downlink transmission or the uplink transmission is determined based on the timing synchronization relationship between the terminal and a network node associated with the physical-layer resource allocated for the cooperative transmission, where the network node is the reference cell or the reference TRP configured by the RRC signaling, or the cell or the TRP sending the RRC signaling.

A terminal side procedure is described below.

Step 1: The terminal receives a RRC signaling, used for pre-configuring cooperative transmission resource, sent from the base station side.
(1) The RRC signaling is received at any of the following base-station-side nodes.
   a) The terminal receives the RRC signaling at a specific cell. The specific cell is a primary cell in CA, a primary cell of a master base station in DC, a primary cell of a secondary base station in DC, or a primary cell in a TAG.
   b) Any cell or TRP currently connected to the terminal, or a DU/DDU connected to a TRP from which the terminal receives the RRC signaling.
   c) A source cell or source TRP performing cooperative transmission, or a DU/DDU connected to a source TRP, from which the terminal receives the RRC signaling.
(2) The RRC signaling includes one or more of following pieces of information, and the corresponding operations of the terminal include following.
   a) An absolute valid time of the cooperative transmission resource (optional, mutually exclusive with b)). The terminal determines the actual valid time of the cooperative transmission resource based on this parameter.
   b) A time offset deltaT of a valid time of the cooperative transmission resource relative to a sending time of the RRC signaling (optional, mutually exclusive with a). The terminal determines the sending time of the RRC signaling and adds the sending time of the RRC signaling to the time offset deltaT, to determine the actual valid time at which receiving the RRC signaling.
   c) Periodicity of the cooperative transmission resource (mandatory). The terminal periodically determines the start time of each cooperative transmission resource based on the valid time and the periodicity of the cooperative transmission resource.
   d) A number of pre-configured resources N within each periodicity of the cooperative transmission resource (optional). The terminal determines that there are N consecutive pre-configured resources within each periodicity of the cooperative transmission resource starting from the start time of each cooperative transmission resource.
   e) Configuration of a physical-layer resource for the cooperative transmission resource (mandatory), including time-frequency resource configuration and/or transmission mode (MCS, RV), etc. The terminal determines the actual physical-layer resource allocation, including a time-frequency resource location, a transmission format MCS, RV, etc., of each cooperative transmission resource within each periodicity.
   f) A reference cell or reference TRP (optional). The terminal determines the actual physical-layer resource allocation by combining items e) and f) and the actual physical-layer resource allocation is associated with the uplink and downlink resource configuration of a specific cell or TRP. If the reference cell or reference TRP is configured, the terminal determines the actual physical-layer resource allocation for the cooperative transmission resource based on the uplink and downlink resource configuration of the pre-configured reference cell or reference TRP. If the reference cell or reference TRP is not configured, the terminal determines the actual physical-layer resource allocation for the cooperative transmission resource based on the uplink and downlink resource configuration of the cell or TRP sending the RRC signaling.
   g) A pre-configured resource type indication (optional), indicating that the currently configured resources are used for cooperative transmission.
   h) Cells or TRPs participating in the cooperative transmission (optional). If this parameter exists, the terminal determines the cells or TRPs participating in the cooperative transmission based on this parameter.

An identity for scrambling the cooperative transmission (optional), such as an x-RNTI or a network-side high-layer identity. If this parameter exists, the terminal performs descrambling (downlink) or scrambling (uplink) for received signals based on the identity, to enable transmissions that may be uniquely identified by both the base station side and the terminal side.

Step 2: After the cooperative transmission resource is pre-configured, at the time at which the resources are validated, the terminal receives downlink transmissions or sends uplink transmissions based on the allocated physical-layer resources and transmission format. The timing synchronization relationship of the downlink transmission or the uplink transmission is determined based on the timing synchronization relationship between the terminal and a network node associated with the physical-layer resource allocated for the cooperative transmission, where the network node is the reference cell or the reference TRP configured by the RRC signaling, or the cell or the TRP sending the RRC signaling.

Example 2: Cooperative transmission resource is pre-configured and activated by a RRC signaling, and the cooperative transmission resource is validated for one time or a specified number of times.

A base station side procedure is described below.

Step 1: The base station side sends a RRC signaling to the terminal to pre-configure a cooperative transmission resource.
(1) A base-station-side node sending the RRC signaling is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The RRC signaling includes one or more pieces of following information.
   a) An absolute valid time of the cooperative transmission resource (optional, mutually exclusive with b)).
   b) A time offset deltaT of a valid time of the cooperative transmission resource relative to a sending time of the RRC signaling (optional, mutually exclusive with a)).
   c) Periodicity of the cooperative transmission resource (optional).
   d) A number of pre-configured resources N within each periodicity of the cooperative transmission resource (optional).
   e) A valid number of times K of the cooperative transmission resource (optional).
   f) Configuration of a physical-layer resource for the cooperative transmission resource, including time-frequency resource configuration, and/or a transmission mode (MCS, RV), etc. (mandatory).
   g) A reference cell or a reference TRP (optional).
   h) A pre-configured resource type indication (optional), indicating that the currently configured pre-configured resources are resources used for cooperative transmission.
   i) Cells or TRPs participating in the cooperative transmission (optional).
   j) An identity for scrambling the cooperative transmission, such as an x-RNTI or a network-side high-layer identity (optional).

Step 2: At the time at which the cooperative transmission resource is validated, cells or TRPs participating in the cooperative transmission on the base station side send downlink transmissions or receive uplink transmissions, based on the physical-layer resource and the transmission format allocated for the cooperative transmission resource. The timing synchronization relationship of the downlink transmission or the uplink transmission is determined based on the timing synchronization relationship between the terminal and a network node associated with the physical-layer resource allocated for the cooperative transmission, where the network node is the reference cell or the reference TRP configured by the RRC signaling, or the cell or the TRP sending the RRC signaling.

A terminal side procedure is described below.

Step 1: The terminal receives a RRC signaling, used for pre-configuring cooperative transmission resource, sent from the base station side.
(1) The RRC signaling is received at any of the following base-station-side nodes:
   a) The terminal receives the RRC signaling at a specific cell. The specific cell is a primary cell in CA, a primary cell of a master base station in DC, a primary cell of a secondary base station in DC, or a primary cell in a TAG.
   b) Any cell or TRP currently connected to the terminal, or a DU/DDU connected to a TRP, from which the terminal receives the RRC signaling.
   c) A source cell or source TRP performing cooperative transmission, or a DU/DDU connected to a source TRP, from which the terminal receives the RRC signaling.
(2) The RRC signaling includes one or more of following pieces of information, and the corresponding operations of the terminal include following.
   a) An absolute valid time of the cooperative transmission resource (optional, mutually exclusive with b)). The terminal determines the actual valid time of the cooperative transmission resource based on this parameter.
   b) A time offset deltaT of a valid time of the cooperative transmission resource relative to a sending time of the RRC signaling (optional, mutually exclusive with a). The terminal determines the sending time of the RRC signaling and adds the sending time of the RRC signaling to the time offset deltaT, to determine the actual valid time at which receiving the RRC signaling.
   c) Periodicity of the cooperative transmission resource (optional). This item is configured simultaneously with item e), that is, "A valid number of times K of the cooperative transmission resource". The terminal periodically determines the start time of each cooperative transmission resource based on the valid time and the periodicity of the cooperative transmission resource.
   d) A number of pre-configured resources N (optional). The terminal determines that there are N consecutive pre-configured resources within each periodicity of the cooperative transmission resource starting from the start time of each cooperative transmission resource. If the cooperative transmission resource is validated periodically or within several periodicities, there are N consecutive pre-configured resources within each periodicity of the cooperative transmission resource. If the cooperative transmission resource is validated for one time, the number of pre-configured resources is determined as N.
   e) A valid number of times K of the cooperative transmission resource (optional). If this parameter is configured, the cooperative transmission resource is validated within K periodicities. If this parameter is not configured, the cooperative transmission resource is validated for one time.
   f) Configuration of a physical-layer resource for the cooperative transmission resource (mandatory), including time-frequency resource configuration and/or transmission mode (MCS, RV), etc.. The terminal determines the actual physical-layer resource allocation, including a time-frequency resource location, a transmission format MCS, RV, etc., of each cooperative transmission resource within each periodicity of cooperative transmission.
   g) A reference cell or reference TRP (optional). The terminal determines the actual physical-layer resource allocation by combining items f) and g) and the actual physical-layer resource allocation is associated with the uplink and downlink resource configuration of a specific cell or TRP. If the reference cell or reference TRP is configured, the terminal determines the actual physical-layer resource allocation for the cooperative transmission resource based on the uplink and downlink resource configuration of the pre-configured reference cell or reference TRP. If the reference cell or reference TRP is not configured, the terminal determines the actual physical-layer resource allocation for the cooperative transmission resource based on the uplink and downlink resource configuration of the cell or TRP sending the RRC signaling.
   h) A pre-configured resource type indication (optional), indicating that the currently configured resources are used for cooperative transmission.
   i) Cells or TRPs participating in the cooperative transmission (optional). If this parameter exists, the terminal determines the cells or TRPs participating in the cooperative transmission based on this parameter.
   j) An identity for scrambling the cooperative transmission resource (optional), such as an x-RNTI or a network-side high-layer identity. If this parameter exists, the terminal performs descrambling (downlink) or scrambling (uplink) for received signals based on the identity, to enable transmissions that may be uniquely identified by both the base station side and the terminal side.

Step 2: At the time at which the cooperative transmission resource is validated, the terminal receives downlink transmissions or sends uplink transmissions based on the allocated physical-layer resources and transmission format. The timing synchronization relationship of the downlink transmission or the uplink transmission is determined based on the timing synchronization relationship between the terminal and a network node associated with the physical-layer resource allocated for the cooperative transmission, where the network node is the reference cell or the reference TRP configured by the RRC signaling, or the cell or the TRP sending the RRC signaling.

Example 3: Cooperative transmission resource is pre-configured by a RRC signaling, the cooperative transmission resource is activated by a PDCCH order, and the cooperative transmission resource is periodically validated.

A base station side procedure is described below.

Step 1: The base station side sends a RRC signaling to the terminal, where the RRC signaling is used to pre-configure a cooperative transmission resource.
(1) A base-station-side node sending the RRC signaling is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The RRC signaling includes one or more pieces of following information.
   a) Periodicity of the cooperative transmission resource (mandatory).
   b) A number of pre-configured resources N within each periodicity of the cooperative transmission resource (optional).
   c) A reference cell or a reference TRP (optional).
   d) A pre-configured resource type indication (optional), indicating that the currently configured pre-configured resources are resources used for cooperative transmission.
   e) Cells or TRPs participating in the cooperative transmission (optional).
   f) An identity for scrambling the cooperative transmission (optional), such as an x-RNTI or a network-side high-layer identity (optional).

Step 2: The base station side sends a PDCCH order to the terminal, to activate the pre-configured cooperative transmission resource.
(1) A base-station-side node sending the PDCCH order is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The PDCCH order used to activate the pre-configured cooperative transmission resource includes one or more of following pieces of information:
   a) An absolute valid time of the cooperative transmission resource (optional, mutually exclusive with b)).
   b) A time offset deltaT of a valid time of the cooperative transmission resource relative to a sending time of the PDCCH order (optional, mutually exclusive with a)).
   c) A number of pre-configured resources N within each periodicity of the cooperative transmission resource (optional). If this parameter is configured by the RRC signaling in Step 1, this parameter may not be configured in the PDCCH order.
   d) Configuration of a physical-layer resource for the cooperative transmission resource (mandatory), including time-frequency resource configuration, and/or a transmission mode (MCS, RV), etc.
   e) A reference cell or a reference TRP (optional). If this parameter is configured by the RRC signaling in Step 1, this parameter may not be configured in the PDCCH order.
   f) Cells or TRPs participating in the cooperative transmission (optional). If this parameter is configured by the RRC signaling in Step 1, this parameter may not be configured in the PDCCH order.

Step 3: At the time at which the cooperative transmission resource is validated, cells or TRPs participating in the cooperative transmission on the base station side send downlink transmissions or receive uplink transmissions, based on the physical-layer resource and the transmission format allocated for the cooperative transmission resource. The timing synchronization relationship of the downlink transmission or the uplink transmission is determined based on the timing synchronization relationship between the terminal and a network node associated with the physical-layer resource allocated for the cooperative transmission, where the network node is specifically the reference cell or the reference TRP indicated by the RRC signaling or the PDCCH order, or the cell or the TRP sending the RRC signaling or the PDCCH order.

A terminal side procedure is described below.

Step 1: The terminal receives a RRC signaling, used for pre-configuring cooperative transmission resource, sent from the base station side.
(1) The RRC signaling is received at any of the following base-station-side nodes.
   a) The terminal receives the RRC signaling at a specific cell. The specific cell is a primary cell in CA, a primary cell of a master base station in DC, a primary cell of a secondary base station in DC, or a primary cell in a TAG.
   b) Any cell or TRP currently connected to the terminal, or a DU/DDU connected to a TRP from which the terminal receives the RRC signaling.
   c) A source cell or source TRP performing cooperative transmission, or a DU/DDU connected to a source TRP, from which the terminal receives the RRC signaling.
(2) The RRC signaling includes one or more of following pieces of information, and the corresponding operations of the terminal include following.
   a) Periodicity of the cooperative transmission resource (mandatory). After the pre-configured cooperative transmission resource is activated by the PDCCH order, the resource is validated periodically based on the configured periodicity.
   b) A number of pre-configured resources N within each periodicity of the cooperative transmission resource (optional). After the cooperative transmission resource is activated by the PDCCH order, the terminal determines that there are N consecutive pre-configured resources within each periodicity of the cooperative transmission resource starting from the start time of each cooperative transmission resource.
   c) A reference cell or a reference TRP (optional).
   d) A pre-configured resource type indication (optional), indicating that the currently configured pre-configured resources are resources used for cooperative transmission.
   e) Cells or TRPs participating in the cooperative transmission (optional).
   f) An identity for scrambling the cooperative transmission resource (optional), such as an x-RNTI or a network-side high-layer identity.

Step 2: The terminal receives the PDCCH order, used for activating the pre-configured cooperative transmission resource, sent from the base station side.
(1) The PDCCH order is received at any of the following base-station-side nodes:
   a) The terminal receives the PDCCH order at a specific cell. The specific cell is a primary cell in CA, a primary cell of a master base station in DC, a primary cell of a secondary base station in DC, or a primary cell in a TAG.
   b) Any cell or TRP currently connected to the terminal, or DU/DDU connected to a TRP, from which the terminal receives the PDCCH order.
   c) A source cell or source TRP performing cooperative transmission, or DU/DDU connected to a source TRP, from which the terminal receives the PDCCH order.
(2) The PDCCH order used to activate the pre-configured cooperative transmission resource includes one or more of following pieces of information, and the corresponding operations of the terminal include following.
   a) An absolute valid time of the cooperative transmission resource (optional, mutually exclusive with b)). The terminal determines the actual valid time of the cooperative transmission resource based on this parameter.
   b) A time offset deltaT of a valid time of the cooperative transmission resource relative to a sending time of the PDCCH order (optional, mutually exclusive with a)). The terminal determines the actual valid time of the cooperative transmission resource based on this parameter.
   c) A number of pre-configured resources N within each periodicity of the cooperative transmission resource (optional). If this parameter is configured by the RRC signaling in Step 1, this parameter may not be configured in the PDCCH order. The terminal determines that there are N consecutive pre-configured resources within each periodicity of the cooperative transmission resource based on the number of pre-configured resources indicated in the RRC signaling or the PDCCH order.
   d) Configuration of a physical-layer resource for the cooperative transmission resource (mandatory), including time-frequency resource configuration and/or transmission mode (MCS, RV), etc. The terminal determines the actual physical-layer resource allocation, including a time-frequency resource location, a transmission format MCS, RV, etc., of each pre-configured resource within each periodicity of the cooperative transmission resource.
   e) A reference cell or a reference TRP (optional). If this parameter is configured by the RRC signaling in Step 1, this parameter may not be configured in the PDCCH order. The terminal determines the actual physical-layer resource allocation by combining d) and e), where the actual physical-layer resource allocation is associated with the uplink and downlink resource configuration of a specific cell or TRP. If the base station indicates the reference cell or the reference TRP by the RRC signaling or the PDCCH order, the terminal determines the actual physical-layer resource allocation for the cooperative transmission resource based on the uplink and downlink resource configuration of the reference cell or reference TRP indicated by the RRC signaling or the PDCCH order. If the reference cell or the reference TRP is not configured, the terminal determines the actual physical-layer resource allocation for the cooperative transmission resource based on the uplink and downlink resource configuration of the cell or the TRP sending the PDCCH order.
   f) Cells or TRPs participating in the cooperative transmission (optional). If this parameter is configured by the RRC signaling in Step 1, this parameter may not be configured in the PDCCH order. If this parameter exists, the terminal determines the cells or the TRPs participating in the cooperative transmission based on the cells or the TRPs participating in the cooperative transmission indicated by the RRC signaling or the PDCCH order.

Step 3: After the cooperative transmission resource is validated, on each cooperative transmission resource, the terminal receives downlink transmissions or sends uplink transmissions based on the physical-layer resource and transmission format allocated for the cooperative transmission resource. If an identity for scrambling the cooperative transmission is indicated in the RRC signaling, the terminal performs descrambling for downlink transmission data based on the identity, or performs scrambling for uplink transmission data based on the identity. The timing synchronization relationship of the downlink transmission or the uplink transmission is determined based on the timing synchronization relationship between the terminal and a network node associated with the physical resources allocated for the cooperative transmission, where the network node is specifically the reference cell or the reference TRP indicated by the RRC signaling or the PDCCH order, or the cell or the TRP sending the RRC signaling or the PDCCH order.

Example 4: Cooperative transmission resource is pre-configured by a RRC signaling, the cooperative transmission resource is activated by a PDCCH order and the cooperative transmission resource is validated for one time or a specified number of times.

A base station side procedure is described below.

Step 1: The base station side sends a RRC signaling to the terminal, to pre-configure a cooperative transmission resource.
(1) A base-station-side node sending the RRC signaling is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The RRC signaling includes one or more pieces of following information.
   a) Periodicity of the cooperative transmission resource (optional).
   b) A number of pre-configured resources N within each periodicity of the cooperative transmission resource (optional).
   c) A valid number of times K of the cooperative transmission resource (optional).
   d) A reference cell or a reference TRP (optional).
   e) A pre-configured resource type indication (optional), indicating that the currently configured pre-configured resources are resources used for cooperative transmission.
   f) Cells or TRPs participating in the cooperative transmission (optional).
   g) An identity for scrambling the cooperative transmission resource (optional), such as an x-RNTI or a network-side high-layer identity.

Step 2: The base station side sends a PDCCH order to the terminal, to activate the pre-configured cooperative transmission resource.
(1) A base-station-side node sending the PDCCH order is any of the following.
   a) A specific cell, such as a primary cell in CA, a primary cell of a master base station in DC, a primary cell of a secondary base station in DC, or a primary cell in a TAG.
   b) Any cell or TRP currently connected to the terminal, or a DU/DDU connected to the TRP.
   c) A source cell or a source TRP performing cooperative transmission with the terminal, or a DU/DDU connected to the source TRP.
(2) The PDCCH order used to activate the pre-configured cooperative transmission resource includes one or more of following pieces of information.
   a) An absolute valid time of the cooperative transmission resource (optional, mutually exclusive with b)).
   b) A time offset deltaT of a valid time of the cooperative transmission resource relative to a sending time of the PDCCH order (optional, mutually exclusive with a)).
   c) A number of pre-configured resources N within each periodicity of the cooperative transmission resource (optional). If this parameter is configured by the RRC signaling in Step 1, his parameter may not be configured in the PDCCH order.
   d) A valid number of times K of the cooperative transmission resource (optional). If this parameter is configured by the RRC signaling in Step 1, this parameter may not be configured in the PDCCH order.
   e) Allocation of a physical-layer resource for the cooperative transmission resource (mandatory), including time-frequency resource configuration, and/or a transmission mode (MCS, RV), etc.
   f) A reference cell or a reference TRP (optional). If this parameter is configured by the RRC signaling in Step 1, this parameter may not be configured in the PDCCH order.
   g) Cells or TRPs participating in the cooperative transmission (optional). If this parameter is configured by the RRC signaling in Step 1, this parameter may not be configured in the PDCCH order.

Step 3: At the time at which the cooperative transmission resource is validated, cells or TRPs, on the base station side, participating in the cooperative transmission, send downlink transmissions or receive uplink transmissions, based on the physical-layer resource and the transmission format allocated for the cooperative transmission resource. The timing synchronization relationship of the downlink transmission or the uplink transmission is determined based on the timing synchronization relationship between the terminal and a network node associated with the physical-layer resource allocated for the cooperative transmission, where the network node is specifically the reference cell or the reference TRP indicated by the RRC signaling or the PDCCH order, or the cell or the TRP sending the RRC signaling or the PDCCH order.

A terminal side procedure is described below.

Step 1: The terminal receive a RRC signaling, used for pre-configuring cooperative transmission resource, sent from the base station side.
(1) The RRC signaling is received at any of the following base-station-side nodes:
   a) The terminal receives the RRC signaling at a specific cell. The specific cell is a primary cell in CA, a primary cell of a master base station in DC, a primary cell of a secondary base station in DC, or a primary cell in a TAG.
   b) Any cell or TRP currently connected to the terminal, or a DU/DDU connected to a TRP, from which the terminal receives the RRC signaling.
   A source cell or source TRP performing cooperative transmission, or a DU/DDU connected to a source TRP, from which the terminal receives the RRC signaling.
(2) The RRC signaling includes one or more of following pieces of information, and the corresponding operations of the terminal include following.
   a) Periodicity of the cooperative transmission resource (optional). If the pre-configured cooperative transmission resource are validated only for one time, this parameter is not configured.
   b) A number of pre-configured resources N within each periodicity of the cooperative transmission resource (optional). After the cooperative transmission resource is activated by the PDCCH order, the terminal determines that there are N consecutive pre-configured resources within each periodicity of the cooperative transmission resource starting from the start time of each cooperative transmission resource.
   c) A valid number of times K of the cooperative transmission resource (optional), configured simultaneously with a).
   d) A reference cell or a reference TRP (optional).
   e) A pre-configured resource type indication (optional), indicating that the currently configured pre-configured resources are resources used for cooperative transmission.
   f) Cells or TRPs participating in the cooperative transmission (optional).
   g) An identity for scrambling the cooperative transmission, such as an x-RNTI or a network-side high-layer identity.

Step 2: The terminal receives the PDCCH order, used for activating the pre-configured cooperative transmission resource, sent from the base station side to the terminal.
(1) A base-station-side node sending the PDCCH order is any of the following.
   a) The terminal receives the PDCCH order at a specific cell. The specific cell is a primary cell in CA, a primary cell of a master base station in DC, a primary cell of a secondary base station in DC, or a primary cell in a TAG.
   b) Any cell or TRP currently connected to the terminal, or a DU/DDU connected to a TRP, from which the terminal receives the PDCCH order.
   c) A source cell or source TRP performing cooperative transmission, or DU/DDU connected to a source TRP, from which the terminal receives the PDCCH order.
(2) The PDCCH order used to activate the pre-configured cooperative transmission resource includes one or more of following pieces of information, and the corresponding operations of the terminal include following.
   a) An absolute valid time of the cooperative transmission resource (optional, mutually exclusive with b)). The terminal determines the actual valid time of the cooperative transmission resource based on this parameter.
   b) A time offset deltaT of a valid time of the cooperative transmission resource relative to a sending time of the PDCCH order (optional, mutually exclusive with a)). The terminal determines the actual valid time of the cooperative transmission resource based on this parameter.
   c) A number of pre-configured resources N within each periodicity of the cooperative transmission resource (optional). If this parameter is configured by the RRC signaling in Step 1, this parameter may not be configured in the PDCCH order. The terminal determines that there are N consecutive pre-configured resources within each periodicity of the cooperative transmission resource based on the number of pre-configured resources indicated in the RRC signaling or the PDCCH order.
   d) A valid number of times K of the cooperative transmission resource (optional). If this parameter is configured by the RRC signaling in Step 1, this parameter may not be configured in the PDCCH order. Based on the periodicity of the cooperative transmission resource configured by the RRC signaling, and the valid number of times K of the cooperative transmission resource indicated in the RRC signaling or the PDCCH order, the terminal determines that the cooperative transmission resource is valid within K periodicities, and determines the periodicities.
   e) Configuration of a physical-layer resource for the cooperative transmission resource (mandatory), including time-frequency resource configuration and/or transmission mode (MCS, RV), etc. The terminal determines the actual physical-layer resource allocation, including a time-frequency resource location, a transmission format MCS, RV, etc., of each pre-configured resource within each periodicity of the cooperative transmission resource.
   f) A reference cell or a reference TRP (optional). If this parameter is configured by the RRC signaling in Step 1, this parameter may not be configured in the PDCCH order. The terminal determines the actual physical-layer resource allocation by combining e) and f), where the actual physical-layer resource allocation is associated with the uplink and downlink resource configuration of a specific cell or TRP. If the base station indicates the reference cell or the reference TRP by the RRC signaling or the PDCCH order, the terminal determines the actual physical-layer resource allocation for the cooperative transmission resource based on the uplink and downlink resource configuration of the reference cell or reference TRP indicated by the RRC signaling or the PDCCH order. If the reference cell or the reference TRP is not configured, the terminal determines the actual physical-layer resource allocation for the cooperative transmission resource based on the uplink and downlink resource configuration of the cell or the TRP sending the PDCCH order.
   g) Cells or TRPs participating in the cooperative transmission (optional). If this parameter is configured by the RRC signaling in Step 1, this parameter may not be configured in the PDCCH order. If this parameter exists, the terminal determines the cells or the TRPs participating in the cooperative transmission based on the cells or the TRPs participating in the cooperative transmission indicated by the RRC signaling or the PDCCH order.

Step 3: After the cooperative transmission resource is activated, on each cooperative transmission resource, the terminal receives downlink transmissions or sends uplink transmissions based on the physical-layer resource and transmission format allocated for the cooperative transmission resource. If an identity for scrambling the cooperative transmission is indicated in the RRC signaling, the terminal performs descrambling for downlink transmission data based on the identity, or performs scrambling for uplink transmission data based on the identity. The timing synchronization relationship of the downlink transmission or the uplink transmission is determined based on the timing synchronization relationship between the terminal and a network node associated with the physical resources allocated for the cooperative transmission, where the network node is specifically the reference cell or the reference TRP indicated by the RRC signaling or the PDCCH order, or the cell or the TRP sending the RRC signaling or the PDCCH order.

Note: In Examples 1-4, different cells or TRPs participating in the cooperative transmission need to notify each other of the pre-configured cooperative transmission resource and/or activation information of the cooperative transmission resource, where a specific notification method is any of the following.
a) If the cells/TRPs participating in the cooperative transmission belong to different DU/DDUs, pre-configuration information and/or activation information of the cooperative transmission resource is interacted through an interface between DU/DDUs.
b) If the cells/TRPs participating in the cooperative transmission belong to different DU/DDUs, pre-configuration information and/or activation information of the cooperative transmission resource is interacted by a CU/CCU through an interface between a CU/CCU and a DU/DDU (similar to the F1 interface of 5G).
c) If the cells/TRPs participating in the cooperative transmission belong to different base stations, pre-configuration information and/or activation information of the cooperative transmission resource is interacted through an interface between base stations (similar to the Xn interface of 5G).

The methods and apparatuses provided by the embodiments of the present application are based on the same concept. Since the principles for solving problems by the methods and the apparatuses are similar, the implementations of the apparatuses and the methods may refer to each other, and repeated parts are not described again.

FIG. 4 is a schematic structural diagram of a terminal according to an embodiment of the present application. As shown in FIG. 4, the terminal includes a memory 420, a transceiver 410, and a processor 400, where the processor 400 and the memory 420 may also be physically separately arranged.

The memory 420 is configured to store a computer program and the transceiver 410 is configured to send and receive data under control of the processor.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 410 may be multiple elements, i.e., including a transmitter and a receiver, units for providing communication with various other devices over transmission media including wireless channels, wired channels, fiber optic cables, and the like. For different UEs, the user interface 430 may also be an interface capable of externally or internally connecting to required devices, where connected devices include but are not limited to a keypad, a display, a speaker, a microphone, a joystick, and the like.

The processor 400 is responsible for managing the bus architecture and general processing, and the memory 420 may store data used by the processor 400 when performing operations.

The processor 410 may be a central processing unit (CPU), an application specific integrated circuit (ASIC), a field-programmable gate array (FPGA), or a complex programmable logic device (CPLD), and the processor may also use a multi-core architecture.

The processor 400 calls the computer program stored in the memory 420 to perform any of the methods provided in embodiments of the present application according to the obtained executable instructions, such as: receiving a radio resource control (RRC) signaling sent from a first network node, where the RRC signaling is used to pre-configure a cooperative transmission resource; and performing data reception or sending based on the cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any TRP currently connected to the terminal;
a source cell or a source TRP performing cooperative transmission; or
a distributed data unit connected to a source TRP performing cooperative transmission.

In some embodiments, the method further includes:
receiving a physical downlink control channel (PDCCH) order sent from a second network node, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the second network node includes any of following:
a primary cell in CA;
a primary cell of a master base station in dual connectivity (DC);
a primary cell of a secondary base station in dual connectivity (DC);
a primary cell in a TAG;
any cell or any TRP currently connected to the terminal;
a distributed data unit connected to any TRP currently connected to the terminal;
a source cell or a source TRP performing cooperative transmission; or
a distributed data unit connected to a source TRP performing cooperative transmission.

In some embodiments, the method further includes:
determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the method further includes:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

FIG. 5 is a schematic structural diagram of a first network node according to an embodiment of the present application. As shown in FIG. 5, the first network node includes a memory 520, a transceiver 510, and a processor 500, where the processor 500 and the memory 520 may also be physically separately arranged.

The memory 520 is configured to store a computer program and the transceiver 510 is configured to send and receive data under control of the processor.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 510 may be multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 510 may be a CPU, an ASIC, a FPGA, or a CPLD, an the processor may also use a multi-core architecture.

The processor 500 calls the computer program stored in the memory 520 to perform any of the methods provided in embodiments of the present application according to the obtained executable instructions, such as: sending a radio resource control (RRC) signaling to a terminal, where the RRC signaling is used to pre-configure a cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the method further includes:
sending a physical downlink control channel (PDCCH) order to the terminal, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the method further includes:
interacting pre-configuration information and/or activation information of the cooperative transmission resource with other network nodes participating in cooperative transmission through an interface between distributed data units, an interface between a central control-plane node and a distributed data unit, or an interface between base stations.

In some embodiments, the method further includes:
determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the method further includes:
determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the method further includes:
determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resourcs, or a resource validated for a specified number of times.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any TRP currently connected to the terminal;
a source cell or a source TRP performing cooperative transmission; or
a distributed data unit connected to a source TRP performing cooperative transmission.

It should be noted here that the above-mentioned terminal and first network node provided in the embodiments of the present application can implement all the method steps implemented in the above mentioned method embodiments, and may achieve the same effects; the same parts and beneficial effects in the embodiment as those in the method embodiments are not specifically described again here.

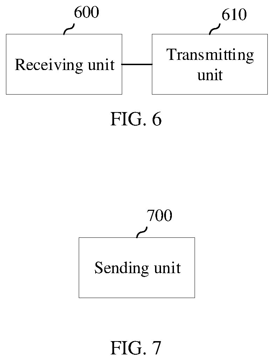

FIG. 6 is a schematic structural diagram of an apparatus for data transmission according to an embodiment of the present application. As shown in FIG. 6, the apparatus includes:
receiving unit, used for receiving a radio resource control (RRC) signaling sent from a first network node, where the RRC signaling is used to pre-configure a cooperative transmission resource; and
transmitting unit, used for performing data reception or transmission based on the cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any TRP currently connected to the terminal;
a source cell or a source TRP performing cooperative transmission; or
a distributed data unit connected to a source TRP performing cooperative transmission.

In some embodiments, the receiving unit 600 is further used for:
receiving a physical downlink control channel (PDCCH) order sent from a second network node, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the second network node includes any of following:
a primary cell in CA;
a primary cell of a master base station in dual connectivity (DC);
a primary cell of a secondary base station in dual connectivity (DC);
a primary cell in a TAG;
any cell or any TRP currently connected to the terminal;
a distributed data unit connected to any TRP currently connected to the terminal;
a source cell or a source TRP performing cooperative transmission; or
a distributed data unit connected to a source TRP performing cooperative transmission.

In some embodiments, the apparatus further includes:
a first determining unit, used for determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the apparatus further includes:
a second determining unit, used for determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the apparatus further includes:
a third determining unit, used for determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

FIG. 7 is a schematic structural diagram of an apparatus for cooperative transmission resource allocation according to an embodiment of the present application. As shown in FIG. 7, the apparatus includes:
sending unit 700, used for sending a radio resource control (RRC) signaling to a terminal, where the RRC signaling is used to pre-configure a cooperative transmission resource.

In some embodiments, the RRC signaling includes one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

In some embodiments, the sending unit 700 is further used for:
sending a physical downlink control channel (PDCCH) order to the terminal, where the PDCCH order is used to activate the cooperative transmission resource.

In some embodiments, the PDCCH order includes one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

In some embodiments, the apparatus further includes:
interacting pre-configuration information and/or activation information of the cooperative transmission resource with other network nodes participating in cooperative transmission through an interface between distributed data units, an interface between a central control-plane node and a distributed data unit, or an interface between base stations.

In some embodiments, the apparatus further includes:
a fourth determining unit, used for determining any of following times as a valid time of the cooperative transmission resource:
a sending time or a reception time of the RRC signaling;
a time indicated by information on valid time of the cooperative transmission resource in the RRC signaling;
a sending time or a reception time of a PDCCH order used to activate the cooperative transmission resource; or
a time indicated by information on valid time of the cooperative transmission resource in a PDCCH order used to activate the cooperative transmission resource.

In some embodiments, the apparatus further includes:
a fifth determining unit, used for determining the cooperative transmission resource based on resource configuration of a third network node;
where the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

In some embodiments, the apparatus further includes:
a sixth determining unit, used for determining the third network node as a timing synchronization reference network node.

In some embodiments, the information on valid time of the cooperative transmission resource includes:
an absolute valid time of the cooperative transmission resource; or
a time offset of an absolute valid time of the cooperative transmission resource relative to a sending time of the information on valid time.

In some embodiments, the cooperative transmission resource is a periodically validated resource, a one-time validated resource, or a resource validated for a specified number of times.

In some embodiments, the first network node includes any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any TRP currently connected to the terminal;
a source cell or a source TRP performing cooperative transmission; or
a distributed data unit connected to a source TRP performing cooperative transmission.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit can be implemented in the form of hardware or software functional unit.

If the integrated unit is implemented in the form of a software functional unit and sold or used as an independent product, it can be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted that the apparatus provided in the embodiments of the present application is capable of implementing all the method steps achieved by the above method embodiments, and may achieve the same technical effects. Therefore, the parts and beneficial effects in the embodiment that are identical to those of the method embodiments will not be described in detail herein.

An embodiment of the present application further provides a non-transitory readable storage medium storing a computer program, where the computer program is used to cause a computer to perform the methods described above.

Specifically, the above-mentioned non-transitory readable storage medium according to the embodiments of the present application can implement all the method steps implemented by the above-mentioned method embodiments, and may achieve the same effect. The same parts and beneficial effects as the same method embodiments will not be repeated here.

It should be noted that the non-transitory readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal involved in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which interact language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer-usable storage medium (including but not limited to disk storage and optical storage) containing computer usable program code

The present application is described with reference to flow charts and/or block diagrams of methods, device (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for data transmission, performed by a terminal, comprising:
receiving a radio resource control (RRC) signaling sent from a first network node, wherein the RRC signaling is used to pre-configure a cooperative transmission resource; and
performing data reception or sending based on the cooperative transmission resource.

2. The method of claim 1, wherein the RRC signaling comprises one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

3. The method of claim 1 or 2, wherein the first network node comprises any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

4. The method of claim 1, further comprising:
receiving a physical downlink control channel (PDCCH) order sent from a second network node, wherein the PDCCH order is used to activate the cooperative transmission resource.

5. The method of claim 4, wherein the PDCCH order comprises one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

6. The method of claim 4 or 5, wherein the second network node comprises any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

7. The method of any of claim 1, 2, 4, or 5, further comprising:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

8. The method of any of claim 1, 2, 4, or 5, further comprising:
determining the cooperative transmission resource based on resource configuration of a third network node;
wherein the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

9. The method of claim 8, further comprising:
determining the third network node as a timing synchronization reference network node.

10. The method of claim 2 or 5, wherein the information on valid time of the cooperative transmission resource comprises:
an absolute valid time of the cooperative transmission resource; or
a time offset of an absolute valid time of the cooperative transmission resource relative to a sending time of the information on valid time.

11. The method of any of claim 1, 2, 4, or 5, wherein the cooperative transmission resource is a periodically validated resource, a one-time validated resource, or a resource validated for a specified number of times.

12. A method for cooperative transmission resource allocation, performed by a first network node, comprising:
sending a radio resource control (RRC) signaling to a terminal, wherein the RRC signaling is used to pre-configure a cooperative transmission resource.

13. The method of claim 12, wherein the RRC signaling comprises one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

14. The method of claim 12, further comprising:
sending a physical downlink control channel (PDCCH) order to the terminal, wherein the PDCCH order is used to activate the cooperative transmission resource.

15. The method of claim 14, wherein the PDCCH order comprises one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

16. The method of any of claims 12 to 15, further comprising:
interacting pre-configuration information and/or activation information of the cooperative transmission resource with other network nodes participating in cooperative transmission through an interface between distributed data units, an interface between a central control-plane node and a distributed data unit, or an interface between base stations.

17. The method of any of claims 12 to 15, further comprising:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

18. The method of any of claims 12 to 15, further comprising:
determining the cooperative transmission resource based on resource configuration of a third network node;
wherein the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

19. The method of claim 18, further comprising:
determining the third network node as a timing synchronization reference network node.

20. The method of claim 13 or 15, wherein the information on valid time of the cooperative transmission resource comprises:
an absolute valid time of the cooperative transmission resource; or
a time offset of an absolute valid time of the cooperative transmission resource relative to a sending time of the information on valid time.

21. The method of any of claims 12 to 15, wherein the cooperative transmission resource is a periodically validated resource, a one-time validated resource, or a resource validated for a specified number of times.

22. The method of any of claims 12 to 15, wherein the first network node comprises any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

23. A terminal, comprising a memory, a transceiver and a processor,
wherein the memory is used for storing a computer program, the transceiver is used for receiving and transmitting data under control of the processor and the processor is used for reading the computer program in the memory and performing operations of:
receiving a radio resource control (RRC) signaling sent from a first network node, wherein the RRC signaling is used to pre-configure a cooperative transmission resource; and
performing data reception or sending based on the cooperative transmission resource.

24. The terminal of claim 23, wherein the RRC signaling comprises one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

25. The terminal of claim 23 or 24, wherein the first network node comprises any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

26. The terminal of claim 23, wherein the operations further comprise:
receiving a physical downlink control channel (PDCCH) order sent from a second network node, wherein the PDCCH order is used to activate the cooperative transmission resource.

27. The terminal of claim 26, wherein the PDCCH order comprises one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

28. The terminal of claim 26 or 27, wherein the second network node comprises any of following:
a primary cell in carrier aggregation (CA);
a primary cell of a master base station in dual connectivity (DC);
a primary cell of a secondary base station in dual connectivity (DC);
a primary cell in a timing advance group (TAG);
any cell or any transmission/reception point (TRP) currently connected to the terminal;
a distributed data unit connected to any transmission/reception point (TRP) currently connected to the terminal;
a source cell or a source transmission/reception point (TRP) performing cooperative transmission; or
a distributed data unit connected to a source transmission/reception point (TRP) performing cooperative transmission.

29. The terminal of any of claim 23, 24, 26, or 27, wherein the operations further comprise:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

30. The terminal of any of claim 23, 24, 26, or 27, wherein the operations further comprise:
determining the cooperative transmission resource based on resource configuration of a third network node;
wherein the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

31. The terminal of claim 30, wherein the operations further comprise:
determining the third network node as a timing synchronization reference network node.

32. The terminal of claim 24 or 27, wherein the information on valid time of the cooperative transmission resource comprises:
an absolute valid time of the cooperative transmission resource; or
a time offset of an absolute valid time of the cooperative transmission resource relative to a sending time of the information on valid time.

33. The terminal of any of claim 23, 24, 26, or 27, wherein the cooperative transmission resource is a periodically validated resource, a one-time validated resource, or a resource validated for a specified number of times.

34. A first network node, comprising a memory, a transceiver and a processor,
wherein the memory is used for storing a computer program; the transceiver is used for receiving and transmitting data under control of the processor; the processor is used for reading the computer program in the memory and performing operations of:
sending a radio resource control (RRC) signaling to a terminal, wherein the RRC signaling is used to pre-configure a cooperative transmission resource.

35. The first network node of claim 34, wherein the RRC signaling comprises one or more pieces of following information:
information on valid time of the cooperative transmission resource;
periodicity of the cooperative transmission resource;
a number of the cooperative transmission resources within each periodicity of the cooperative transmission resource;
a valid number of times of the cooperative transmission resource;
configuration information of a physical-layer resource for the cooperative transmission resource;
a reference network node indication;
a pre-configured resource type indication;
information of network nodes participating in cooperative transmission; or
an identity for scrambling cooperative transmission.

36. The first network node of claim 34, wherein the operations further comprise:
sending a physical downlink control channel (PDCCH) order to the terminal, wherein the PDCCH order is used to activate the cooperative transmission resource.

37. The first network node of claim 36, wherein the PDCCH order comprises one or more pieces of following information:
information on valid time of the cooperative transmission resource;
a number of the cooperative transmission resources within each periodicity of the cooperative transmission resource;
a valid number of times of the cooperative transmission resource;
allocation information of a physical-layer resource for the cooperative transmission resource;
a reference network node indication; or
information of network nodes participating in cooperative transmission.

38. The first network node of any of claims 34 to 37, wherein the operations further comprise:
interacting pre-configuration information and/or activation information of the cooperative transmission resource with other network nodes participating in cooperative transmission through an interface between distributed data units, an interface between a central control-plane node and a distributed data unit, or an interface between base stations.

39. The first network node of any of claims 34 to 37, wherein the operations further comprise:
determining any of following times as a valid time of the cooperative transmission resource:
a sending time or a reception time of the RRC signaling;
a time indicated by information on valid time of the cooperative transmission resource in the RRC signaling;
a sending time or a reception time of a physical downlink control channel (PDCCH) order used to activate the cooperative transmission resource; or
a time indicated by information on valid time of the cooperative transmission resource in a physical downlink control channel (PDCCH) order used to activate the cooperative transmission resource.

40. The first network node of any of claims 34 to 37, wherein the operations further comprise:
determining the cooperative transmission resource based on resource configuration of a third network node;
wherein the third network node is the first network node or a reference network node indicated in the RRC signaling in case that a physical-layer resource is allocated for the cooperative transmission resource by the RRC signaling; or, the third network node is a network node sending the PDCCH order, a reference network node indicated in the RRC signaling, or a reference network node indicated in the PDCCH order in case that a physical-layer resource is allocated for the cooperative transmission resource by the PDCCH order used to activate the cooperative transmission resource.

41. The first network node of claim 40, wherein the operations further comprise:
determining the third network node as a timing synchronization reference network node.

42. An apparatus for data transmission, comprising:
receiving unit, used for receiving a radio resource control (RRC) signaling sent from a first network node, wherein the RRC signaling is used to pre-configure a cooperative transmission resource; and
transmitting unit, used for performing data reception or transmission based on the cooperative transmission resource.

43. An apparatus for cooperative transmission resource allocation, comprising:
sending unit, used for sending a radio resource control (RRC) signaling to a terminal, wherein the RRC signaling is used to pre-configure a cooperative transmission resource.
